# EUROPEAN PATENT SPECIFICATION

(11) **EP 1 831 584 B1**
(45) Date of publication and mention of the grant of the patent: **03.06.2009**
(21) Application number: 05814974.1
(22) Date of filing: 02.12.2005
(51) Int. Cl.: F16F 15/123

(54) **A CLUTCH DISC AND A CLUTCH SYSTEM**
KUPPLUNGSSCHEIBE UND KUPPLUNGSSYSTEM
DISQUE D'EMBRAYAGE ET SYSTEME D'EMBRAYAGE

(30) Priority: 02.12.2004 BR PI0405406
(43) Date of publication of application: 12.09.2007
(73) Proprietor: ZF DO Brasil LTD. Divisao ZF Sachs, CEP-09891-901 Sao Bernardo do Campo, SP (BR)
(72) Inventor: FOUAD EL HADDAD, Georges, CEP-04613-030 São Paulo-SP (BR); THIMOTEO, Thiago, CEP-03147-000 São Paulo-SP (BR); MARQUES, Joel, 09850-360 São Bernardo do Campo - SP (BR); PERES DE OLIVEIRA, Leandro, 09663-070 Säo Bernardo - SP (BR)
(74) Representative: Burt, Matthew Thomas
(86) International application number: PCT/BR2005/000250
(87) International publication number: WO 2006/058403

(56) References cited:
- WO-A-00/29761
- DE-C1- 19 524 749
- FR-A- 2 531 162

## Description

The present invention relates to a clutch disc provided with a differentiated torsion damping system, particularly devised a clutch system for use on automotive vehicles, as well as to a clutch system equipped with a clutch disc thus configured.

### Description of the Prior Art

Clutch discs used in the present-day clutch systems, called diaphragm clutch, are known form the prior art.

The clutch system is designed for selective connection between the engine and the transmission system of an automotive vehicle (gearbox, differential, semi-axles, etc.) and enables the driver to obtain a progressive transmission of torque from one to the other. The clutch system enables one to set a vehicle in motion by means of a progressive coupling, with a certain sliding between the engine and the transmission system and separates, when desired, the two components, making the rotation of each of them independent, thus enabling a precise and easy engagement of the gears. In the automobile industry, one employs universally the dry mono-disc clutch, formed by a rotary disc (covered by friction material on both sides and engaging with the input shaft of the gear change by means of a notched coupling), which is coupled to the flying wheel of the vehicle engine or the like (a turning element). When the clutch system is in a normal operation situation, the two elements join to a plate linked to its rotation ("plateâu") that, under the action of one or more springs, exerts pressure on the conducted disc, pressed the latter and the flying wheel.

When the separation between disc and flying wheel is performed voluntarily, the plate moves against the spring action and is separated from the disc. The latter becomes totally independent of the flying wheel in its rotation. The present-day clutches are constituted by only one diaphragm-type spring.

The diaphragm consist of a conical spring (due to its shape; best known as Chinese hat) with slots that irradiate from its center (concentric slots). The spring is mounted almost plane, so that, when it recovers its original shape, it exerts uniform pressure along its borders that are on the "plateâu" (pressure plate). The push ring that acts on the diaphragm makes it bend, releasing the "plateâu" that has the function of fixing the disc against the engine flying wheel.

This system is the preferred one at present, due to the need to occupy less and less space in the engine compartment (the "plateâu" with spring-diaphragm has a very reduced thickness, which is very important in compact vehicles) and enables the use of light-weight mechanical components, minimizing the resistance to the turn of the engine, providing less mechanical losses.

Brazilian document PI 9602996-0 discloses a clutch disc provided with a double torsional damping system, basically composed of covering plates, a hub flange and a hub, friction coats, main torsion dampers and idle-run dampers (pre-damping).

In the idle-run operation of the engine, the cover plates, the hub flange and the torsion spring of the main torsion damper move with respect to the cube in the circumferential direction only within a torsion clearance existing in the indentation between the hub cube and the hub. In this situation, only the idle-run torsion damper is called on by means of its torsion springs. These springs are urged through two cover plates connected to the hub flange, on the hub disc, connected to the hub. This urging causes the elementary friction device to come into operation, generating friction between its components.

The device consists of a bearing ring, a hub disc, a hub, a distancing ring and an undulated spring. A first friction point is generated between the shoulder molded on the bearing ring, directed to the hub disc. A second friction point is generated between the hub and the undulated spring through the distancing ring. There is still an idle-run load friction device, the actuation of which occurs mainly between the friction ring and the cover plate, generating friction, and the positioning between the friction ring and the hub flange, also generating friction. There are further two friction points foreseen, on the one hand, between the cover plate of the main torsion damper and the cover plate adjacent the idle-run torsion damper and, on the other hand, between the angulated ring and the friction coatings.

This clutch disc has the drawback of having too many components and a number of regions of friction/contact with each other, rendering it a high-complexity project, difficult to carry out and with a production cost not so reduced as it would be desirable.

Brazilian document PI 9705610-3 discloses a clutch disc provided with a double torsional absorption system composed of a first damper 2 and a second damper 3 or main damper.

The part of torque flow inlet of the clutch dist 1 simultaneously represents the part of inlet of the main damper 3, and is formed by a drag disc, as well as a counter-disc 7.

The torque flow inlet part the second damper 3 is formed by a flange 8, which represents an internal denture 9 that engages the external denture 10 of a hub 11, which forms the outlet part of the clutch disc 1. The actuation region of the first damper 2 is defined by the clearance of the faces of the teeth 8a and 8b of the flange 8.

The torque flow inlet part of the first damper 2 is formed by a component 18 joined, in a torsion-proof manner, to the flange 8. Radially inside the component 18 there is another component 20, which is part of the torque flow inlet part of the first damper 2 and is joined, in a torque-proof manner, to the hub 11. The component 18 is in direct friction contact with the disc 5 and serves to produce a friction damping for the second damper 3. With a relative torsion of the discs 5 and 7 with respect to the flange 8, a friction damping is equally produced by a friction ring 30 and by a disc spring 29, this damper being conjugated with the second damper 3.

The disc 5 acts in conjunction with a friction ring 32, which is provided axially between this disc 5 and the external denture 10 of the hub 11. The friction ring 32 is urged axially against the disc 5 by a force accumulator in the form of a disc spring 37. The force accumulator 37 is adjusted with respect to a force accumulator 29 in such a way that ti produces an axial force smaller than the force accumulator 29, guaranteeing that the component 19 will remain in friction engagement with the disc 5.

On the toothed side away from the friction ring 32, there is another force accumulator in the form of a disc spring 39, which is axially pressed between the disc 7 and the hub 11. The disc spring 39 is joined, in a torsion-proof manner, to the disc 7 and rests, possibly with intercalation of a friction ring 40, on an axial shoulder of the hub 11.

Like the above document, this clutch disc also has the drawback of having too many components and a number of regions of friction with each other, rendering it a design of high complexity, difficult to carry out and with a production cost not so reduced as it would be desirable.

Document WO 00/39481 discloses a clutch disc provided with a torsion damper, the torsion damper interposed between a friction disc and the crankshaft for absorbing the vibrations and oscillations from the engine.

The vibration damper comprises a main damper 10 interposed between a friction disc 12 and an annular flange 14 mounted on a hub 16, the hub 16 being rotationally integral with the crankshaft, and a pre-damper 20 acting between the flange 14 and the hub 16.

The springs 26 of the pre-damper 20 are received in housings in the form of incisures opened radially on one side, which is delimited, on the one hand, by internal teeth of an annular ring 36 integral in rotation with the flange 14 and, on the other hand, by the external teeth of a ring 38 that serves as a support and guidance for the disc 32, on which the friction disc 12 is fixed.

When the rotation transmitted by the engine to the clutch increases, the springs 26 of the pre-damper are pressed until the teeth 22 of the flange 14 rest on the external teeth 24 of the hub 16, which is then linked in rotation with the flange 14, the vibrations and the oscillations of the engine are absorbed by the springs 28 of the main damper until these springs are pressed to the maximum point, the flange 14 then becomes connected in rotation to the guide discs 32 and 34 and the friction disc 12.

In an equally known manner, the plane friction disc 40 is associated to the flange 14 to ease the shocks of its teeth 22 on the teeth 24 of the hub 16, caused by the increase of the rotation transmitted to the clutch. This disc 40, which is interposed between the flange 14 and the pre-damper 20, is applied onto the flange 14 by an elastic disc 44.

In an already known manner, the annular ring 36 is pressed axially between the annular flange 14 and the guide disc 32 of the disc 12, by means of a friction disc 58 and of a disc 60 interposed between the annular flange 14 and the other guide disc 32.

Another friction disc 62 associated to another disc 64 is provided between the guide disc 34 and an end face of the hub 16, and the discs 62, 64 are surrounded by the discs 58, 60.

The hub 16 is the output element of the torsion damper, the input element of which is the disc 12 equipped with friction coatings. Alternatively, the disc 12 or a prolongation of the guide disc 32 may be fixed directly on the flying wheel of the engine.

The ring 38 of the pre-damper engages with the teeth 24 of the hub 16 thanks to the axial ends which extend in chamfers defined by the teeth 24, the outer diameter of which is equal to that of the ring 38 and to their axial ends.

In the same way, this clutch disc also has the drawback of having too many components and a number of regions of friction/contact with each other, rendering it a high-complexity project, difficult to carry out and with a production cost higher than the embodiment of the present invention.

French document FR 2,787,845 also discloses a clutch disc provided with a torsion damper, composed of a pre-damper and a main damper.

The pre-damper 28 is interposed between an annular flange 18 and a hub 12, and comprises organs that are elastic to the circumferential action, such as helical springs 30 of low rigidity, which are designed for absorbing vibrations and oscillations between the flange 18 and the hub 12 within the engine idle of an internal combustion engine. The pre-damper 28 comprises an external annular compartment 32, which is made from a moldable plastic material, and an internal annular compartment 34 also of a moldable plastic or a friction material, the cylindrical surfaces of which have radial teeth that delimit incisures for housing springs 30.

The external compartment 32 is integral in rotation with the annular flange 18 through axial ends 36 formed in projections on its external periphery, which are received in corresponding orifices of the flange 18, the internal compartment 34 integral in rotation of the hub 12, thanks to radial teeth 38 formed on projection on the internal surface of the compartment 34, which fit into the radial teeth 40 of the external surface of the hub 12.

Friction discs 48 and 50 are interposed between a second guide disc 20 and a radial surface of the hub 12, and between the guide disc 20 and the annular flange 18, respectively, the disc 48 being integral in rotation with the guide disc 20 and is urged onto the hub 12 by an elastic disc 52, the other disc 50 being integral in rotation with the second guide disc 20 and is urged onto the annular flange 18 by an elastic disc 54. The friction of the disc 48 on the hub 12 contributes for the damping of the vibrations absorbed by the pre-damper 28, and the friction of the disc 50 on the annular flange 18 contributes for damping the vibrations and oscillations absorbed by the main damper.

As the rotation increases, the elastic organs 30 of the pre-damper 28 are pressed and a ring 56 turn with the annular flange 18 and the guide discs 16 and 20 with respect to the hub 12 until their teeth 62 meet the teeth 40 of the hub 12. At this moment, the teeth 46 of the annular flange 18 are still away from the teeth 44 of the hub, the circumferential clearance between these teeth being wider than the circumferential clearance between the teeth 62 and 40.

When the rotation increases more, the elastic organs 30 of the pre-damper 28 are pressed at a higher level, the ring 56 remains motionless in rotation with respect to the hub 12, and the assembly formed by the guide discs 16 and 20 and the annular flange 18 turns with respect to the hub 12 until the teeth 46 of the annular flange 18 meet the teeth 44 of the hub 12. This contact between the teeth, however, is locked and damped by friction of the ring 56 on the first guide disc 16.

If the rotation is further increased, the annular flange 18, the hub 12 and the ring 56 are integral in rotation, the teeth 46 of the flange 18 meet the teeth 44 of the hub, and the teeth 62 of the ring 56, in turn, meet the teeth 40 of the hub. The transmission oscillations and vibrations are then absorbed by the elastic organs of the main damper, interposed between the guide discs 16 and 20 and the annular flange 18 and damped by friction of the disc 50 on the flange 18 and the compartment 32 on the guide disc 16.

The protrusions 42 formed between the teeth 40 and 44 of the hub 12, as well as the protrusion 60 formed on the hub 12 between its cylindrical end portion 58 and the teeth 40, enable one to position subsequently the internal compartment 34 of the pre-damper 28 and the ring 56 on the hub 12.

The disadvantage of this damping system lies in the fact that the clutch disc has too many components and a number of regions of friction/contact with each other, rendering it a design of high complexity, difficult to carry out and with a production cost higher than the embodiment of the present invention.

WO 00/29761 A (Valeo), published 25 May 2000, discloses a clutch disk for a motor vehicle, which comprises a torsional damper. The clutch disk includes a bearing 58 with at least two cavities for springs 64, which act to dampen torsional vibration and shocks.

### Objectives of the invention

An objective of the present invention is to provide a clutch disc provided with a double vibration-damping mechanism that provides the correct pre-absorption of the torsion vibrations generated by the engine and is more simple, efficient and durable than the clutch discs known at present, besides having a reduced manufacture cost.

Additionally, it is an objective of the present invention to provide a clutch system having the clutch disc aimed at.

### Brief Description of the Invention

The objectives of the present invention are achieved by means of a clutch disc, particularly for a clutch system to effect the selective coupling between the engine and a transmission of an automotive vehicle, comprising a first torsion disc, associatable with the engine, a second retention disc, rigidly associated to the torsion disc and a flange associated to the first and second discs by means of at least one resilient damping element defining a first torsion-vibration damping system, the flange being associated to the hub by means of a torsion-vibration damping system. The second torsion-vibration damping system comprises at least two resilient pre-damping elements and at least one self-centering hub element, which has at least two second cavities for association of the resilient pre-damping elements. The self-centering element is linked directly to the flange by means of the resilient pre-damping elements.

Also, the objectives of the present invention are achieved by means of a clutch system, particularly for effecting the coupling between an engine and a transmission of an automotive vehicle, comprising at least one "plateâu", at least one bearing, at least one clutch actuating system and one clutch disc as defined above.

The present invention relates to a clutch disc that, among other advantages, has:
- an efficient system for pre-damping torsion vibrations, considerably reducing the transfer of vibrations from the engine to the vehicle transmission, reducing the noise that results from the operation of the transmission system and contributing to an increase in its useful life; and
- few components in the torsion-vibration pre-damping system in comparison with the present-day clutch discs, resulting in greater ease of manufacture and, therefore, ion a more reduced final sale cost, which increases its chance of penetration into the consumer market.

### Brief Description of the Drawings

The present invention will now be described in greater detail with reference to an embodiment represented in the drawings. The figures show:
- Figure 1 is a front view of the clutch disc of the present invention;
- Figure 2 is a first cross-sectional view of the disc illustrated in figure 1;
- Figure 3 is a second cross-sectional view of the disc illustrated in figure 1;
- Figure 4 is a first cross-sectional view of a detail of the disc illustrated in figure 1;
- Figure 5 is a second cross-sectional view of a detail of the disc illustrated in figure 1;
- Figure 6 is a partial view of the flange and of the torsion pre-damping system of the disc illustrated in figure 1;
- Figure 7 is a third cross-sectional view of a detail of the disc illustrated in figure 1;
- Figure 8 is a partial view of the self-centering ring of the disc illustrated in figure 1;
- Figure 9 is a partial view of the self-centering ring of the disc illustrated in figure 1 when associated with the disc hub;
- Figure 10 corresponds to two illustrations of interaction of the flange with the disc illustrated in figure 1, by applying torques in opposite directions;
- Figure 11 is a fourth cross-sectional view of a detail of the disc illustrated in figure 1; and
- Figure 12 is a fifth cross-sectional view of a detail of the disc illustrated in figure 1.

### Detailed Description of the Figures

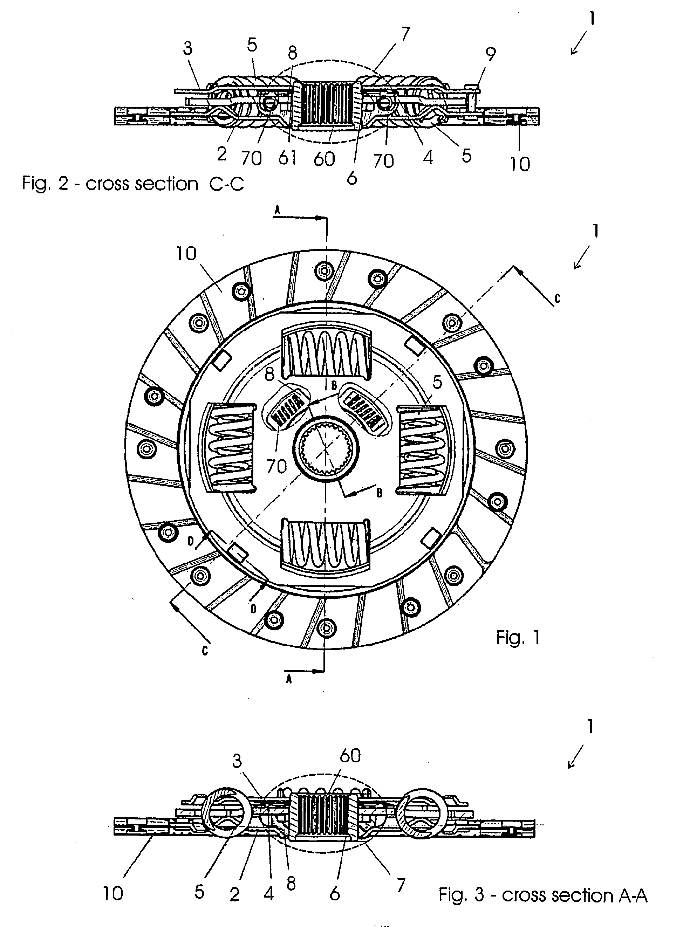

According to a preferred embodiment and as can be seen from figure 1, the present invention relates to a clutch disc 1, particularly for a clutch system to effect selective coupling between an engine and a transmission of an automotive vehicle (not shown), as well as to a clutch system provided of the presently devised disc. The clutch disc 1 is designed for use in so-called dry monodisc clutch systems call.

The clutch system enables equalization, in a progressive manner, between the rotation of a crankshaft of an internal combustion engine (which, as a rule, has a minimum operation rotation not lower than 400 rpm = rotations per minute) and the vehicle wheels, through a transmission system (gearbox, differential gear, semi-axles, etc.)

For this purpose, one provides a clutch disc directed connected to the main shaft of the gearbox and couplable to the engine flying wheel, which is a circular piece connected to the crankshaft and that rotates integral with it.

As a rule, the disc is kept against the flying wheel by means of a diaphragm-type spring, or else by a plurality of helical springs, the latter being an out-of-date solution which is almost out of use.

Thus, the normal' operation situation of the clutch system keeps engine and gearbox mechanically connected. The pressure exerted by the diaphragm spring causes the friction force between flying wheel and disc to be enough for transmission of torque between them. In order to define the necessary and sufficient friction force between them, the friction surface of the disc for friction with the flying wheel is coated with a material having rugosity / known friction coefficient, as for example plates of sintered material.

When it is necessary to disconnect the engine rotation from the transmission-system rotation (for instance, when the vehicle is stopped, with the engine running and the transmission in gear), it is necessary to move the clutch disc 1 from the flying wheel, which, as a rule, is carried out by actuating a so-called clutch pedal.

In the same way, it is necessary to couple disc and flying wheel when the vehicle begins to be put in motion after engagement a gear in the gearbox. In order to prevent jolts, the coupling between disc and flying wheel in these situations should be progressive, this meaning that the rotation of the engine and of the transmission should be equalized little by little, which increases the comfort of using the vehicle and the durability of the components of the transmission system.

The clutch pedal, upon being actuated by means of a cable or a hydraulic circuit, moves an actuation fork that surpasses the force exerted by the diaphragm spring and effects the mentioned separation. The system continues in this state until the pedal is released, and the diaphragm spnng again positions the disc against the flying wheel.

In recent times, microprocessed automatic systems for actuating the clutch system have been developed, which replace the pedal by hydraulic or electric circuits that effect the coupling and uncoupling between disc and flying wheel. Anyway, except for the actuation manner, the clutch system proper does not present any perceptible modifications with respect to those of manual actuation.

Due to the fact that the coupling and uncoupling between disc and "plateâu" is controlled by actuating a pedal or the like, it is said that the clutch system make the selective coupling between engine and gear of a vehicle.

The operation of the dry monodisc clutch system having been explained in its essence, we now begin the detailed description of the clutch disc 1 of the present invention.

The clutch disc 1 has a substantially circular shape and comprises first and second vibration damping systems, to attenuate the torsion vibrations generated by the engine on the transmission.

Constructively, the disc 1 comprises a first torsion disc 2 and a second retention disc 3, both mounted substantially parallel and axial, rigidly joined or associated by means of at least two distancing pins 9, arranged substantially orthogonally, so that a pre-defined axial spacing is delimited between them. As a rule, these pins 9 are riveted, but they may be fixed by other means, if appropriate.

The space between both torsion disc 2 and retention disc 3 is occupied by a flange 4, also substantially circular, parallel and concentric to them.

At least two but preferably four resilient damping elements 5 are still provided, preferably in the form of helical springs, radially positioned with respect to the three above components, connecting them to each other. The (preferred but not compulsory) exact positioning of the four springs 5 can be viewed in figures 1 and 3, and they are offset by 90 degrees from each other. The helical springs 5 enable the torsion disc 2 and the retention disc 3 to move angularly with respect to the flange 4, by urging them, which brings about the absorption of torsion vibrations. These elements configure the first torsion-vibration damping system. Evidently, the amount of helical springs 5 may vary depending on the advisability / need of the project.

The torsion disc 2 further has an end region 10, the diameter of which is larger than the diameter of the retention disc 3 and of the flange 4, and that is provided with a coating of known friction coefficient. It is this end region 10, hereinafter called coupling region, that effectively comes into contact with the engine flying wheel and receives the torque produced by the latter.

Once the disc 1 is associated to the engine flying wheel, the torque is transmitted from the coupling region 10 to the assembly of the torsion disc 2 and retention disc 3, and consequently to the flange 4, through the helical springs 5. This first vibration damping system has specific characteristics of rigidity and damping, so that the actuation (compression) of the springs 5 takes place whenever the vehicle is in motion, or at least with the engine at high rotation.

In order to transmit torque to the vehicle transmission, the flange 4 is associated to a hub 6, which is provided with a concentric cylindrical through bore 60 that, by means of notches / pins, is fixed to the main shaft of the gearbox. The hub 6 further has a plurality of toothed radial projections 61, the operation of which will be described later.

In order for the flange 4 to be associable to the hub 6, it has a substantially central through bore.

Once the torsion disc 2 and the retention disc 3 are linked to each other and linked to the flange 4 by means of the helical springs 5, and considering that the flange 4 is linked to the hub 6, one can evidently say that both discs 2, 3 are also linked to the hub 6, indirectly by means of the first damping system.

The second damping system provided on the disc 1, called pre-damping system 7, comprises a set of pre-damping resilient elements in the preferred form of pre-damping helical springs 70 (preferably two or four springs, although the latter can vary, if necessary or desirable) and a self-centering hub element 8, preferably in the form of a self-centering ring. The springs 70 are mounted on respective first cavities 40 located in the flange 4 and respective analogous second cavities 80 provided in the self-centering ring 8, which are aligned (see figures 1, 2, 6, 8 and 9). Evidently, the resilient elements may assume other configuration than that of helical springs.

The torsion vibration pre-damping system 7 has such characteristics of rigidity and damping, that the actuation of the springs 70 takes place throughout the operation of the engine, that is to say, individually when the vehicle is at low gear (engine operation at low rotation, transmission not engaged and disc 1 coupled to the flying wheel) and together with the first damping system in the other conditions of use.

The self-centering ring 8 has a substantially truncated-cone shape and has radial projections from its external perimeter, where the second cavities 80 are located. The cavities 80 are positioned so as to minimize the radial unbalancing with respect to the clutch disc. Preferably, the self-centering ring 8 has 4 radial projections offset by 90 degrees from each other, each of which containing the respective second cavity 80, but it is evident that the number of projections and/or the offsetting between them may vary, if necessary or desirable, consequently varying the number of cavities 80. The position of the springs 70 is such that half perimeter of the orthogonal surface of the driving axle of the system 7 is in contact with the flange 4, and the other half of the perimeter is in contact with the respective cavity 80 of the self-centering ring 8, on which it is located. Therefore, one can say that the self-centering 8 is directly linked to the flange 4 by means of at least two springs 70.

Since the ring 8 contains the cavities 80 that retain the springs 70, one manages to eliminate the need to use auxiliary friction rings to interconnect the ring 8 with the flange 4, these rings existing on the clutch discs of the prior art. This causes the clutch disc of the present invention to be more simple and cheaper than the present-day clutch discs, since there will be reduction of components.

As can be clearly seen in figures 2, 3, 5, 7, 11 and 12, the self-centering ring 8 is mounted parallel and adjacent the flange 4, between it and the torsion disc 2.

If all the second cavities 80 have the same length, without allowing any axial clearance between the springs 70 and their side walls, all the springs 70 will be simultaneously compressed due to the movement of the flange 4. In this case, the system 7 will have only one rigidity stage.

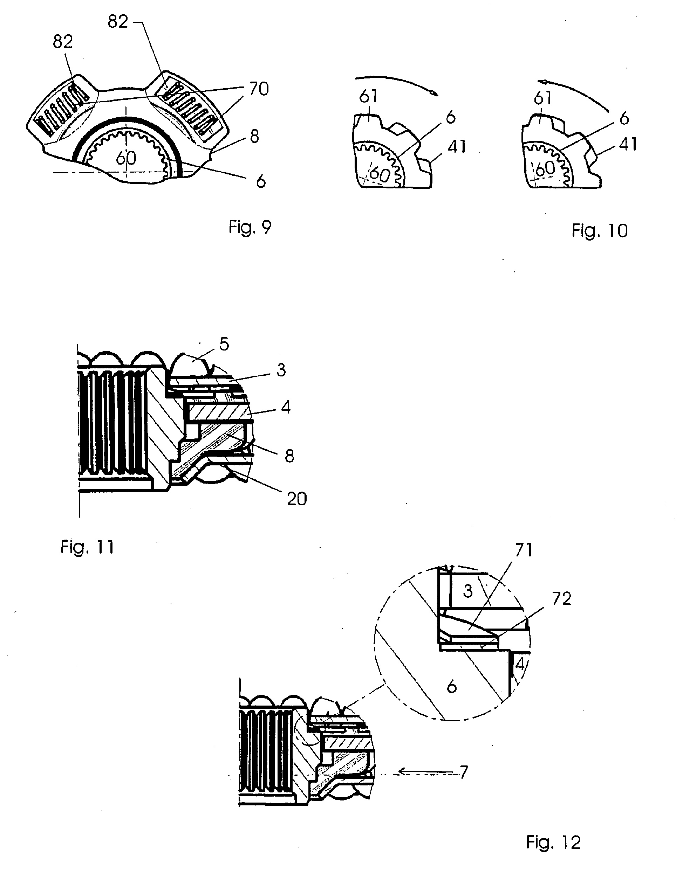

However, there is the possibility that the second cavities 80 will have two length measures, the first pair of directly opposite cavities (offset by 180 degrees from each other) having a first length measure and a second par of diametrically opposite cavities having a second length measure, different from the first one (see figure 9).

In this second situation, there is a predetermined clearance between the axial surfaces of the springs 70 mounted and the respective cavities of the self-centering ring 8, so that first the springs 70 mounted on the smaller cavities are actuated and, after a certain angular displacement, the springs 70 mounted on the larger cavities will be actuated, which characterizes a system 7 with a double rigidity stage (first stage with rigidity equivalent to the two springs 70 positioned in the smaller cavities, and second stage with rigidity equivalent to the sum of the four springs 70).

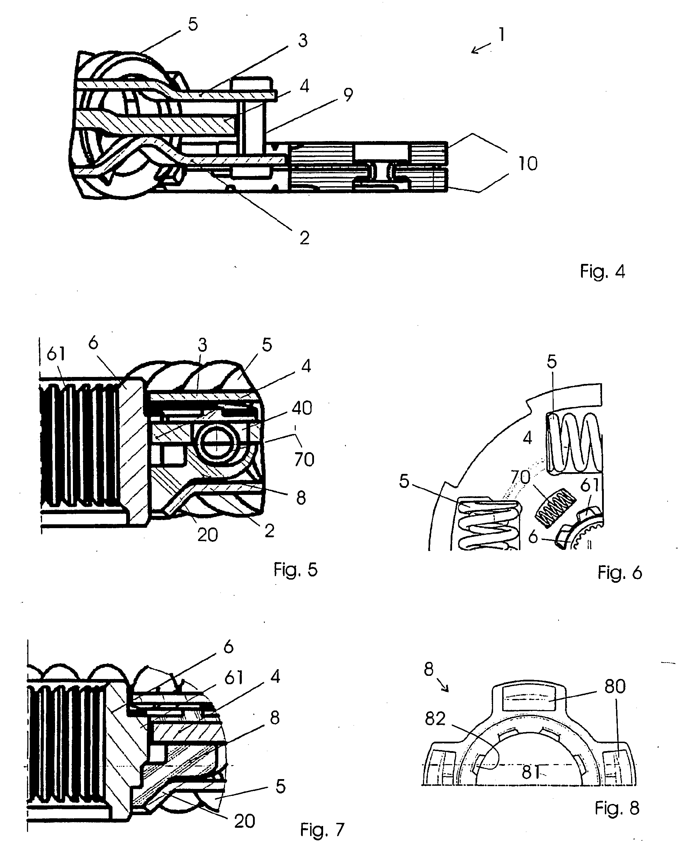

The self-centering ring 8 has a substantially cylindrical and central through bore 81 to enable its positioning around the hub 6, and around this bore there is a plurality of recesses 82 arranged adjacent to each other. These recesses cooperate with the toothed projections 61 of the hub 6. The area presented by each recess 82 is substantially equivalent to the area of each projection 61, so that both components are connected to each other without clearance (see figure 7). In addition, the self-centering ring 8 cooperates with the hub 6 so that, once they are mounted on the clutch disc 1, there will be no clearance or axial movement of the ring 8 with respect to the hub 6, that is to say, if the hub 6 is moved in the direction of the torsion disc 2, there will also be axial movement of the self-centering ring 8 toward the disc 2.

When the flange 4 turns about the longitudinal axis of the hub 6, it will act on the springs 70, which will transmit movement to the self-centering ring 8.

The torque is then transmitted from the self-centering ring 8 to the hub by cooperation between the recesses 82 and the toothed projections 81. In order for the torque to be transmitted, it is necessary to overcome the resistance of the springs 70.

The flange 4 also has, around the central through bore, recesses 41 for cooperation with the toothed projections 61 of the hub, in order to effect its coupling with the hub (see figure 10). These recesses do not need necessarily to have the same measures of the recesses of the self-centering ring 8. The area presented by each recess 41 is larger than the area of each toothed projection 61, so that the flange 4 may have a free movement with respect to the hub 6, limited by two end points of each recess (see figure 10).

According to the relative angular position between the cavities in the flange 4 for the main damping springs 5 and the cavities for the pre-damping springs 70, one may also define the actuation angle of the pre-damping in clockwise and counter-clockwise directions of the clutch disc, since the relative angular position between the cavities of the flange 4 and their toothed projections are predefined.

As mentioned before, the self-centering ring 8 has a substantially conical shape, and the conical surface defined by it is turned to the torsion disc 2, cooperating with an equally conical surface 20 provided thereon. This situation may be clearly seen in figures 5, 7, 11 and 12 and the self-centering characteristic of the ring 8 occurs exactly because the contact between its conical surface and the respective conical surface of the torsion disc 2 enables the compensation of disalignment between the rotation axis of the engine flying wheel and the rotation axis of the main shaft of the gearbox.

Between the flange 4 and the retention disc 3 (therefore, positioning opposite the ring 8), there is an undulate resilient ring, a plate spring or any other functional resilient element 71, mounted on the hub 6, positioning it in the direction of the torsion disc 2.The preferred embodiment of the disc 1 has an undulate ring 71 and foresees a contact ring 72 between it and the hub 6, in order to maximize the pressure that it will exert against the hub 6 and to prevent it from escaping from its correct operation position.

As already mentioned, the self-centering ring 8 cooperates with the hub 6 so that, if the hub 6 is axially moved in the direction of the torsion disc 2, there will also be a corresponding axial movement of the self-centering ring 8 toward the torsion disc 2, guaranteeing contact between the conical surface of the self-centering ring 8 and the conical surface 20 of the disc 2.

Therefore, one obtains a friction torque on the conical surface, which varies depending on the external force exerted by the resilient ring 71 and on the friction coefficient of the materials of the self-centering ring 8 and of the torsion disc 2. This friction torque occurs whenever there is relative movement between the self-centering ring 8 and the torsion disc 2 (see fig. 12). In the same way, a friction torque occurs between the resilient ring 71 and the contact ring 72 of the hub 6.

The friction torque, which varies depending also on the intensity of the relative rotational movement between the self-centering ring 8 and the torsion disc 2, limits movement of the self-centering ring 8 (and consequently of the hub 6), provided by the springs 70, operation as a damper. In this way, the movement amplitude caused by the contraction / distension of the springs 70 during the absorption of the torsion vibrations is absorbed by this friction torque, and the vehicle transmission receives little or no torsion vibration from the crankshaft of the engine.

Alternatively, the self-centering ring 8 may have such a geometry that it will enable the movement of a friction ring with respect to a component than the torsion disc 2. Additionally, if, and only if, this relative movement occurs during the second stage of the pre-damping (in case the pre-damping system is configured in this way, which will be described later) in any direction of rotation, an additional friction torque will occur, which will be added to the friction torque of the first stage. Then, a differentiated friction torque is produced between the first and the second stages of the pre-damping, called friction torque of the second stage of pre-damping.

Another configurative variation of the presently disclosed clutch disc 1 comprises a pre-damping system with friction jump, in which the self-centering ring 8 moves the friction ring toward another component, by a determined angle, generating an additional friction torque. The system behaves in the same way until the maximum pre-damping angle is reached. Then, if turned in the opposite direction, the friction ring does not have any relative movement as far as a predetermined angle and, therefore, the friction torque will be smaller than that observed before. In the opposite sense, is the same behavior.

A further novel and inventive invention is a clutch system, particularly for effecting the coupling between an engine and a transmission of an automotive vehicle, comprising at least one "plateâu", at least one bearing and at least one clutch actuation means, characterized by comprising a clutch disc as defined before.

This system may be made available in a single clutch in the form of a kit for replacement on used vehicles.

A preferred embodiment having been described, one should understand that the scope of the present invention embraces other possible variations, being limited only by the contents of the accompanying claims, which include the possible equivalents.

## Claims

1. A clutch disc, particularly used in a clutch system for effecting the selective coupling between an engine and a transmission of an automotive vehicle, comprising a first torsion disc (2), associable to the engine, a second retention disc (3) rigidly associated to the torsion disc (2) and a flange (4) associated to the first and second discs (2, 3) by means of at least one damping resilient element (5) defining a first torsion-vibration damping system, the flange (4) being associated, by means of a second torsion- vibration damping system (7) to a hub (6) associable to the vehicle transmission, the second torsion-vibration damping system (7) comprising at least two pre-damping resilient elements (70) and at least one self-centering hub element (8), the disc (1) being **characterized in that** the self-centering hub element (8) has at least two second cavities (80) for association of the pre-damping resilient elements (70), the pre-damping resilient element (70) effecting directly the connection between the flange (4) and the self-centering hub element (8).

2. A disc according to claim 1, **characterized in that** the second torsion-vibration damping system (7) is a pre-damping system constituted by at least two pre-damping resilient elements (70) in the form of pre-damping helical springs located in respective first cavities (40) of the flange and in respective cavities (80) of the self-centering hub element (8).

3. A disc according to claim 1 or 2, **characterized in that** the self-centering hub element (8) is a self-centering ring.

4. A disc according to claim 3, **characterized in that** it has a substantially truncated-cone-shape and comprises a substantially central through bore (81) for its positioning around the hub (6).

5. A disc according to claim 4, **characterized in that** the self-centering ring (8) comprises a plurality of recesses (82) arranged adjacent each other around the through bore (81).

6. A disc according to claim 5, **characterized in that** it comprises four second cavities (80) positioned substantially offset by 90 degrees from each other, two cavities (80) that are offset by 180 degrees having a second length measure different from the first one.

7. A disc according to claim 6, **characterized in that** it comprises four pre-damping springs (70) positioned inside the second cavities (80).

8. A disc according to claim 4, 5, 6 or 7, **characterized in that** the torsion disc (2) has a substantially truncated-cone-shaped region (20) cooperating with the self-centering ring (8), the ring (8) being pressed against the region (20) by means of a resilient element (71).

9. A disc according to claim 1, **characterized in that** it comprises four damping resilient elements (5) in the form of helical springs arranged offset by 90 degrees from each other.

10. A disc according to claim 1, **characterized in that** it enables the production of a differentiated friction torque between the first and the second pre-damping stage.

11. A disc according to claim 1, **characterized in that** it comprises a pre-damping system with a friction jump.

12. A clutch system, particularly for effecting the coupling between an engine and a transmission of an automotive vehicle, comprising at least one "plateau", at least one bearing and at least one clutch actuation means, **characterized in that** it comprises a clutch disc as defined in claims 1 to 11.

13. A clutch system according to claim 12, **characterized in that** it is made available in a single kit package for replacement in used vehicles.

## Patentansprüche

1. Kupplungsscheibe, die insbesondere in einem Kupplungssystem verwendet wird, um die gezielte Kopplung zwischen einem Motor und einem Getriebe eines Kraftfahrzeugs zu bewirken, mit einer ersten Torsionsscheibe (2), die mit dem Motor verbunden werden kann, einer zweiten Haltescheibe (3), die starr mit der Torsionsscheibe (2) verbunden ist, und einem Flansch (4), der mittels mindestens eines elastischen Dämpfungselements (5), das ein erstes Torsionsschwingungsdämpfungssystem bildet, mit der ersten und der zweiten Scheibe (2, 3) verbunden ist, wobei der Flansch (4) mittels eines zweiten Torsionsschwingungsdämpfungssystems (7) mit einer Nabe (6) verbunden ist, die mit dem Fahrzeuggetriebe verbunden werden kann, wobei das zweite Torsionsschwingungsdämpfungssystem (7) mindestens zwei elastische Vordämpfungselemente (70) und mindestens ein selbstzentrierendes Nabenelement (8) umfasst, wobei die Scheibe (1) **dadurch gekennzeichnet ist, dass** das selbstzentrierende Nabenelement (8) mindestens zwei Hohlräume (80) zur Verbindung der elastischen Vordämpfungselemente (70) aufweist, wobei das elastische Vordämpfungselement (70) die Verbindung zwischen dem Flansch (4) und dem selbstzentrierenden Nabenelement (8) direkt bewirkt.

2. Scheibe nach Anspruch 1, **dadurch gekennzeichnet, dass** das zweite Torsionsschwingungsdämpfungssystem (7) ein Vordämpfungssystem ist, das durch mindestens zwei elastische Vordämpfungselemente (70) in Form von Vordämpfungsschraubenfedern, die sich in jeweiligen ersten Hohlräumen (40) des Flansches und in jeweiligen Hohlräumen (80) des selbstzentrierenden Nabenelements (8) befinden, gebildet wird.

3. Scheibe nach Anspruch 1 oder 2, **dadurch gekennzeichnet, dass** das selbstzentrierende Nabenelement (8) ein selbstzentrierender Ring ist.

4. Scheibe nach Anspruch 3, **dadurch gekennzeichnet, dass** sie eine im Wesentlichen kegelstumpfförmige Gestalt aufweist und eine im Wesentlichen zentrale Durchgangsbohrung (81) fiir ihre Positionierung um die Nabe (6) herum umfasst.

5. Scheibe nach Anspruch 4, **dadurch gekennzeichnet, dass** der selbstzentrierende Ring (8) mehrere Aussparungen (82) aufweist, die nebeneinander um die Durchgangsbohrung (81) herum angeordnet sind.

6. Scheibe nach Anspruch 5, **dadurch gekennzeichnet, dass** sie vier zweite Hohlräume (80) umfasst, die im Wesentlichen um 90 Grad voneinander versetzt positioniert sind, wobei zwei Hohlräume (80), die um 180 Grad versetzt sind, ein zweites Längenmaß aufweisen, das sich von dem ersten unterscheidet.

7. Scheibe nach Anspruch 6, **dadurch gekennzeichnet, dass** sie vier Vordämpfungsfedern (70) umfasst, die innerhalb der zweiten Hohlräume (80) positioniert sind.

8. Scheibe nach Anspruch 4, 5, 6 oder 7, **dadurch gekennzeichnet, dass** die Torsionsscheibe (2) einen im Wesentlichen kegelstumpfförmigen Bereich (20) aufweist, der mit dem selbstzentrierenden Ring (8) zusammenwirkt, wobei der Ring (8) mittels eines elastischen Elements (71) gegen den Bereich (20) gedrückt wird.

9. Scheibe nach Anspruch 1, **dadurch gekennzeichnet, dass** sie vier elastische Dämpfungselemente (5) in Form von Schraubenfedern umfasst, die um 90 Grad voneinander versetzt angeordnet sind.

10. Scheibe nach Anspruch 1, **dadurch gekennzeichnet, dass** sie die Erzeugung eines differenzierten Reibmoments zwischen der ersten und der zweiten Vordämpfungsstufe ermöglicht.

11. Scheibe nach Anspruch 1, **dadurch gekennzeichnet, dass** sie ein Vordämpfungssystem mit einem Reibungssprung umfasst.

12. Kupplungssystem, insbesondere zur Bewirkung einer Kopplung zwischen einem Motor und einem Getriebe eines Kraftfahrzeugs, mit mindestens einer Druckplatte, mindestens einem Lager und mindestens einem Kupplungsbetätigungsmittel, **dadurch gekennzeichnet, dass** es eine Kupplungsscheibe nach den Ansprüchen 1 bis 11 umfasst.

13. Kupplungssystem nach Anspruch 12, **dadurch gekennzeichnet, dass** es in einem Einzelausrüstungspaket zum Austausch in Gebrauchtwagen hergestellt ist.

## Revendications

1. Disque d'embrayage, utilisé en particulier dans un système d'embrayage pour effectuer l'accouplement sélectif entre un moteur et une transmission d'un véhicule automobile, comprenant un premier disque de torsion (2), pouvant être associé au moteur, un deuxième disque de retenue (3) associé rigidement au disque de torsion (2) et une bride (4) associée aux premier et deuxième disques (2, 3) au moyen d'au moins un élément d'amortissement élastique (5) définissant un premier système d'amortissement de torsion-vibration, la bride (4) étant associée, au moyen d'un deuxième système d'amortissement de torsion-vibration (7), à un moyeu (6) pouvant être associé à la transmission du véhicule, le deuxième système d'amortissement de torsion-vibration (7) comprenant au moins deux éléments de pré-amortissement élastiques (70) et au moins un élément de moyeu à centrage automatique (8), le disque (1) étant **caractérisé en ce que** l'élément de moyeu à centrage automatique (8) comporte au moins deux deuxièmes cavités (80) pour l'association des éléments de pré-amortissement élastiques (70), l'élément de pré-amortissement élastique (70) effectuant directement la liaison entre la bride (4) et l'élément de moyeu à centrage automatique (8).

2. Disque selon la revendication 1, **caractérisé en ce que** le deuxième système d'amortissement de torsion-vibration (7) est un système de pré-amortissement constitué par au moins deux éléments de pré-amortissement élastiques (70) sous la forme de ressorts hélicoïdaux de pré-amortissement situés dans des premières cavités (40) respectives de la bride et dans des cavités (80) respectives de l'élément de moyeu à centrage automatique (8).

3. Disque selon la revendication 1 ou 2, **caractérisé en ce que** l'élément de moyeu à centrage automatique (8) est une bague à centrage automatique.

4. Disque selon la revendication 3, **caractérisé en ce qu'**il a une forme sensiblement de cône tronqué et comprend un alésage traversant sensiblement central (81) pour son positionnement autour du moyeu (6).

5. Disque selon la revendication 4, **caractérisé en ce que** la bague à centrage automatique (8) comprend une pluralité d'évidements (82) agencés adjacents les uns aux autres autour de l'alésage traversant (81).

6. Disque selon la revendication 5, **caractérisé en ce qu'**il comprend quatre deuxièmes cavités (80) positionnées sensiblement décalées de 90 degrés les unes des autres, deux cavités (80) qui sont décalées de 180 degrés ayant une deuxième mesure de longueur différente de la première.

7. Disque selon la revendication 6, **caractérisé en ce qu'**il comprend quatre ressorts de pré-amortissement (70) positionnés à l'intérieur des deuxièmes cavités (80).

8. Disque selon la revendication 4, 5, 6 ou 7, **caractérisé en ce que** le disque de torsion (2) comporte une région (20) en forme sensiblement de cône tronqué coopérant avec la bague à centrage automatique (8), la bague (8) étant pressée contre la région (20) au moyen d'un élément élastique (71).

9. Disque selon la revendication 1, **caractérisé en ce qu'**il comprend quatre éléments d'amortissement élastiques (5) sous la forme de ressorts hélicoïdaux agencés décalés de 90 degrés les uns des autres.

10. Disque selon la revendication 1, **caractérisé en ce qu'**il permet la production d'un couple de friction différencié entre les premier et deuxième étages de pré-amortissement.

11. Disque selon la revendication 1, **caractérisé en ce qu'**il comprend un système de pré-amortissement avec saut de friction.

12. Système d'embrayage, en particulier pour effectuer l'accouplement entre un moteur et une transmission d'un véhicule automobile, comprenant au moins un « plateau », au moins un palier et au moins un moyen d'actionnement d'embrayage, **caractérisé en ce qu'**il comprend un disque d'embrayage selon les revendications 1 à 11.

13. Système d'embrayage selon la revendication 12, **caractérisé en ce qu'**il est disponible en un ensemble prêt à monter unique pour un remplacement dans des véhicules d'occasion.
